# EUROPÄISCHE PATENTSCHRIFT

(11) **EP 1 063 167 B1**
(45) Veröffentlichungstag und Bekanntmachung des Hinweises auf die Patenterteilung: **10.09.2003**
(21) Anmeldenummer: 00112925.3
(22) Anmeldetag: 20.06.2000
(51) Int. Cl.: B64D 11/02, E03F 1/00, E03D 11/02

(54) **Toilettensystem, insbesondere für Verkehrsmittel**
Toilet system, particularly for vehicles
Système de toilettes, en particulier pour des véhicules

(30) Priorität: 24.06.1999 DE 19928894
(43) Veröffentlichungstag der Anmeldung: 27.12.2000
(73) Patentinhaber: Airbus Deutschland GmbH, 21129 Hamburg (DE)
(72) Erfinder: Erdmann, Wolfgang, 21614 Buxtehude (DE); Gienke, Torsten, 25421 Pinneberg (DE); Heinrich, Hans-Jürgen, 22609 Hamburg (DE)
(74) Vertreter: Hansmann, Dierk, Dipl.-Ing.

(56) Entgegenhaltungen:
- EP-A- 0 903 444
- US-A- 3 504 381
- US-A- 5 604 938
- PATENT ABSTRACTS OF JAPAN vol. 2000, no. 03, 30. März 2000 (2000-03-30) -& JP 11 350574 A (INAX CORP), 21. Dezember 1999 (1999-12-21)
- DURAVIT: "www.duravit.com/wondergliss/forschung.htm", INTERNET DOCUMENT, , 17. Mai 1999, Band , Nr. , Seiten -
- DURAVIT: "http:\\www.duravit.com/wondergliss/qualitaet.h- tm", INTERNET DOCUMENT, , 17. Mai 1999, Band , Nr. , Seiten -
- DURAVIT: "http:\\www.duravit.com/wondergliss/produkte.ht- m", INTERNET DOCUMENT, , 17. Mai 1999, Band , Nr. , Seiten -
- DURAVIT: "http:\\www.duravit.com/wondergliss/forschung.h- tm", INTERNET DOCUMENT, , 17. Mai 1999, Band , Nr. , Seiten -

## Beschreibung

Die Erfindung betrifft ein Toilettensystem, insbesondere für Verkehrsmittel, wobei mindestens ein Toilettenbecken vorgesehen ist, welches über ein Absaugventil mit einem Sammelbehälter verbunden ist.

Derartige Toilettensysteme, die insbesondere als Vakuumtoilettensysteme ausgebildet sind, werden in Verkehrsmitteln genutzt, die nur begrenzt Spül- und Abwasser transportieren können, was beispielsweise an Bord eines Flugzeuges der Fall ist. Alle bekannten Toilettensysteme nutzen zum Spülen des Toilettenbeckens Spülflüssigkeit, wobei die Spülflüssigkeit Frischwasser sein kann oder zum Teil sogenanntes "Grauwasser", d.h. Frischwasser, welches bereits in Handwaschbecken benutzt wurde.

So ist aus DE 42 01 986 eine Vakuumtoilette bekannt, die im wesentlichen ausgestattet ist mit einer Auslöseeinrichtung, einem Spülwasserventil und einem Absaugventil, welches in einer Verbindungsleitung zwischen Toilettenbecken und Sammelbehälter angeordnet ist. Mittels Steuereinrichtungen wird die Spülflüssigkeit nach Betätigung der Auslösevorrichtung dem Toilettenbecken zugeführt, anschließend öffnet das Absaugventil und die im Toilettenbecken enthaltenen Verunreinigungen werden zusammen mit der Spülflüssigkeit in den Sammelbehälter geleitet.

Aus einem Firmenprospekt der Firma sanivac Vakuumtechnik GmbH, 1997 ist ein Vakuumtoiletten-System beschrieben, wie es für die Schiffsausrüstung Anwendung findet. Auch hier ist aufgrund des Einsatzes der Vakuumtechnik möglich, eine Wasserersparnis zu herkömmlichen WC's zu erzielen und zur Spülung mit ca. 1 I Spülwasser auszukommen. Auch teflonbeschichtete Oberflächen von Toilettenbecken sind aus diesem Dokument bereits bekannt.

Aus DE 92 91 684 U1 ist eine Toilettenanordnung bekannt, wobei im Spülkreislauf neben einer Spülflüssigkeit auch ein Geruchsbindemittel bzw. Reinigungsmittel der Spülflüssigkeit zugesetzt wird. Damit wird erreicht, dass die Toilettenspülung effektiver gemacht und eine Geruchsbildung vermindert wird. Zu einer weiteren Erhöhung der Effektivität wird vorgeschlagen, dass die Toilettenschüssel mit einer Schicht aus Polytetrafluoräthylen (PTFE) versehen wird. Eine vereinfachte Reinigung von Fäkalienrückständen ist somit möglich.

Weiterhin sind aus EP 0 295 508 sowie 0 363 012 Vakuumtoilettensysteme bekannt, die zumindest teilweise "Grauwasser" zum Spülen der Toilettenbecken nutzen. Es ist hierbei notwendig, dass das bereits im Handwaschbecken genutzte Wasser mittels geeigneter Filtertechnik aufbereitet wird, um das Verstopfen der Spülwasserleitungen zu verhindern. Neben der notwendigen Steuerung des Spülprozesses ist hier eine Wasseraufbereitung notwendig. Insbesondere an Bord eines Flugzeuges ist eine Reduzierung der notwendigen Spülflüssigkeit von großer Bedeutung. Bei Großraumflugzeugen, die bis zu 500 Passagiere transportieren können, muss für die Toilettenbenutzung eines jeden Passagiers entsprechende Spülflüssigkeit (Frischwasser bzw. "Grauwasser") vorgesehen sein. Auch wenn bereits durch den bekannten Stand der Technik eine Vielzahl von Toilettensystem mit reduzierter Spülflüssigkeit bekannt sind, ist es jedoch gerade für Großraumflugzeuge, die bei entsprechenden langen Flugzeiten einen gewaltigen Wasserverbrauch aufweisen, notwendig, den Wasserverbrauch zu Spülzwecken auf ein Minimum einzuschränken.

Aus US-A-5 604 938 ist ein Vakuumtoilettensystem für Verkehrsmittel bekannt. Das Toilettenbecken ist vorzugsweise aus Komposit-Material aufgebaut, um eine leichte Bauweise zu erreichen. Das Toilettenbeckens ist mit Nickel plattiert, um eine beständige, nichtklebende, verschleißfeste Beschichtung der Oberfläche zu erzielen. Trotz der Antihaftbeschichtung des Toilettenbeckens ist Spülwasser notwendig und eine Spülwasserzuführung und ein Spülwassertank als Komponenten des Toilettensystems sind unerlässlich.

Aus einer Internetinformation www.duravit.com/wondergliss/forschung.htm ist eine Nanobeschichtung "Wondergliss" für Sanitärgegenstände aus Keramik bekannt. Eine Sol-Gel-Schicht wird auf das Keramikmaterial aufgebracht und danach mittels eines thermischen Prozesses eingebrannt. Hierbei sind unter anderem Anwendungen für Haushaltswaschbecken oder Toiletten vorgesehen, die das Entfernen von Verunreinigungen vereinfachen; jedoch ist eine Verwendung von Spülwasser in allen Fällen nötig.

Der Erfindung liegt daher die Aufgabe zugrunde, ein gattungsgemäßes Toilettensystem auszubilden, welches durch Weglassen von Spülflüssigkeit eine Gewichtsreduzierung zu den bisherigen Lösungen ermöglicht und damit die Systemtechnik vereinfacht und somit insbesondere für die Anwendung in Großraumflugzeugen geeignet ist.

Diese Aufgabe wird bei einem gattungsgemäßen Toilettensystem mit den im Patentanspruch 1 genannten Maßnahmen gelöst.

Dabei ist insbesondere von Vorteil, dass eine erhebliche Gewichtsreduzierung gegenüber den bisherigen Lösungen erreicht wird, was insbesondere für den Einsatz im Flugzeugbau ein wesentliches Erfordernis darstellt. Mit der Nutzung einer Nanoschicht kann der gesamte Spülwasserbedarf entfallen, wobei eine hohe Reinigungs- und Hygienequalität erreicht wird. Neben dem eingesparten Gewicht aufgrund des Wegfalls vom Spülwasser werden auch die Systemkomponenten Spülwasserzuführung, Spülwassertank sowie Steuerung der Spülwasserzuführung weggelassen, was erhebliche Einsparungen im Gewicht sowie im Wartungsaufwand mit sich bringt.

Ein Verfahren zur Herstellung eines gattungsgemäßen Toilettensystems ist in Anspruch 5 angegeben.

Weiterbildungen und vorteilhafte Ausgestaltungen sind in den Unteransprüchen 2 bis 4 sowie 6 bis 12 angegeben.

Dabei ist mit der Maßnahme gemäß Anspruch 2 insbesondere erreicht, dass gezielt in dem Bereich, der mit verunreinigenden Substanzen in Berührung kommt und der für einen Passagier zugänglich ist, ein Verschmutzen und Haften von Teilchen verhindert wird.

Ein weiterer Vorteil ergibt sich mit der Maßnahme gemäß Anspruch 3, wobei mit der vorhandenen Absaugluft bei einem Vakuumtoilettensystem gezielt das Reinigen des Toilettenbeckens unterstützt werden kann.

Die Maßnahme gemäß Anspruch 4 zeigt mehrere Alternativen zur Ausbildung der Nanoschicht.

Die Maßnahmen gemäß der Ansprüche 6 und 7 zeigen vorteilhafte Verfahrenschritte zur Vorbehandlung der mit der Nanoschicht zu versehenen Systemkomponenten.

Die Maßnahmen gemäß der Ansprüche 8 bis 10 zeigen jeweils alternative Herstellungsverfahren zur Erzeugung der erfindungsgemäßen Nanoschicht auf.

Die Weiterbildungen gemäß der Ansprüche 11 und 12 geben eine vorteilhafte, unaufwendige Herstellungsmethode an.

In der Zeichnung ist ein Ausführungsbeispiel der Erfindung dargestellt, das nachstehend anhand der Figuren 1 bis 5 näher beschrieben wird. In den Figuren sind gleiche Bauteile mit gleichen Bezugszeichen versehen.

Es zeigt
- Fig. 1: eine erste Ausführungsform eines Vakuumtoilettensystems mit einer erfindungsgemäßen Toilettenschüssel,
- Fig. 2: eine zweite Ausführungsform eines Vakuumtoilettensystems mit einer erfindungsgemäßen Toilettenschüssel,
- Fign. 3 und 4: eine Darstellung der unterschiedlichen Benetzungswinkel an der Oberfläche einer Toilettenschüssel in Abhängigkeit von der Oberflächenbeschichtung und
- Fig. 5: eine erfindungsgemäße Toilettenschüssel als Einzelheit mit einer Darstellung der Beschichtung.

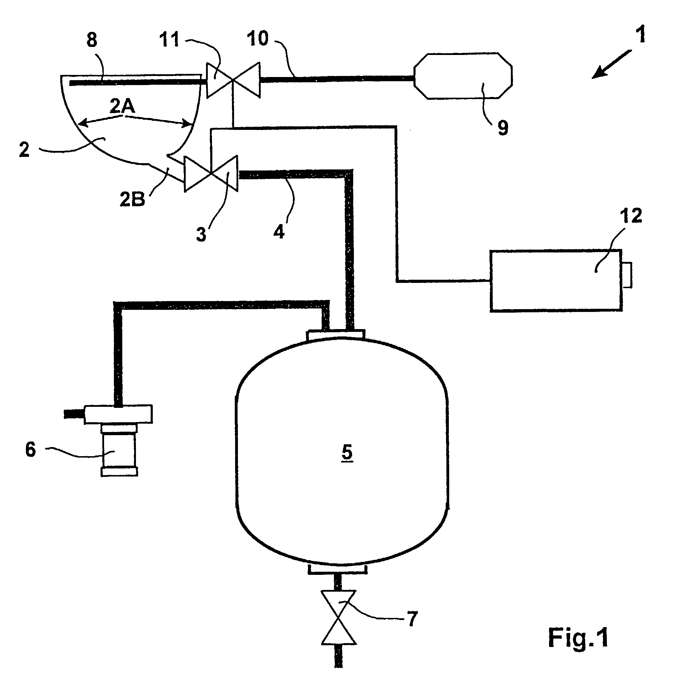

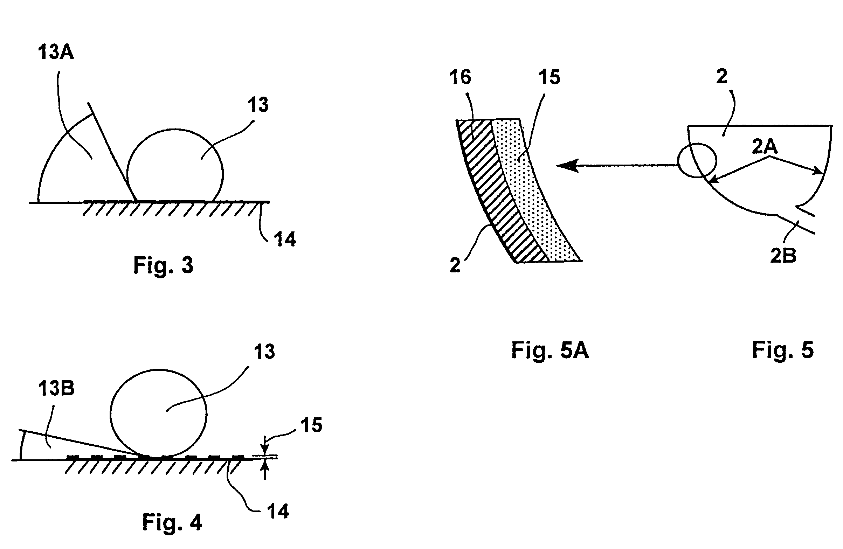

In Fig. 1 ist schematisch ein Toilettensystem 1 gezeigt wie es in einem Flugzeug zur Anwendung kommen kann. Das Toilettensystem 1 umfasst im wesentlichen mindestens eine Toilettenschüssel 2, die über ein Abwasserventil 3 mit einer Sammelleitung 4 verbunden ist. Es ist möglich, dass mehrere Toiletten an unterschiedlichen Aufstellungsorten an eine Sammelleitung 4 angeschlossen sind. Die Sammelleitung 4 führt zu einem Sammelbehälter 5, in dem die Verunreinigungen bzw. das Abwasser gesammelt werden. Der Transportvorgang zwischen der Toilettenschüssel 2, in der sich die Verunreinigungen befinden, und dem Sammelbehälter 5 wird durch eine Druckdifferenz ermöglicht. Das Toilettensystem 1 ist dafür als Vakuumtoilettensystem ausgebildet. Ein Vakuumgenerator 6 erzeugt den notwendigen Unterdruck. Insbesondere für die Anwendung in einem Flugzeug ist aber auch die Nutzung des herrschenden Unterdrucks während eines Fluges für das Vakuumtoilettensystem möglich. Der Sammelbehälter 5 weist weiterhin ein Tankentleerungsventil 7 auf, über das das gesammelte Abwasser bedarfsweise abgelassen werden kann. Zur Spülung der Toilettenschüssel 2 ist ein Spülring 8 vorgesehen, über den die Spülflüssigkeit in die Toilettenschüssel 2 geleitet wird und dort die Toilettenschüssel 2 reinigt. Die Spülflüssigkeit wird einem Spülflüssigkeitstank 9 entnommen, der über eine Zuführleitung 10 und einem Spülwasserventil 11 mit der zu reinigenden Toilettenschüssel 2 verbunden ist. Über eine Steuereinheit 12 werden die Ventile 3 und 11, d. h. das Abwasserventil und das Spülwasserventil geschaltet. Nach einer Toilettenbenutzung wird über eine Auslöseeinrichtung (nicht gezeigt) der Spülvorgang in Gang gesetzt, um die Fäkalien oder andere Verunreinigungen aus der Toilette in den Sammelbehälter 5 zu befördern. Die Steuereinheit 12 öffnet das Spülwasserventil 11, um Spülwasser über den Spülring 8 in die Toilettenschüssel 2 einzuleiten bzw. einzusprühen (beispielsweise mittels Sprühdüsen, um den Bedarf an Spülwasser so gering wie möglich zu halten). Das Abwasser (Fäkalien und Spülwasser) laufen aufgrund der Schwerkraft in den Auslauf 2B der Toilettenschüssel 2. Anschließend öffnet das Abwasserventil 3 für kurze Zeit und die im Bereich der Toilettenschüssel 2 angesammelten Substanzen werden aufgrund der Druckdifferenz in den Bereich der Sammelleitung 4 geführt und von dort in den Sammelbehälter 5 befördert. Das Spülwasser ist bei herkömmlichen Toilettensystemen notwendig, um die in der Toilettenschüssel 2 haften gebliebenen Verunreinigungen zu entfernen. Um diese Verunreinigungen mit nur einer Mindestmenge an Spülwasser bzw. ohne Spülwasser zu entfernen, wird als erfindungsgemäße Lösung vorgeschlagen, die Toilettenschüssel 2 mit einer speziellen Beschichtung 15 auszuführen. Die Beschichtung 15 ist erfindungsgemäß als Nanobeschichtung ausgeführt und innerhalb der Toilettenschüssel 2 zumindest in einem Bereich 2A aufgebracht, der mit verunreinigenden Substanzen in Berührung kommt. Der Aufbau und die Herstellungsweise der Schicht 15 wird näher in den Figuren 3 bis 5 gezeigt und in der dazugehörigen Figurenbeschreibung näher beschrieben. Die Beschichtung weist adhäsionshemmende oder zumindest adhäsionsreduzierende Eigenschaften auf. Die in Fig. 1 gezeigte nicht beanspruchte erste Ausführungsform des Toilettensystems 1 verwendet eine nanobeschichtete Toilettenschüssel 2, die mit einer gegenüber herkömmlichen Toilettenschüsseln reduzierten Wassermenge zur Reinigung auskommt. Damit ist insbesondere für Großraumflugzeuge, die über lange Strecken fliegen, der notwendige Wasserbedarf für die Toilettenspülung erheblich reduziert und die freiwerdenen Gewichtskapazitäten können für zusätzliche Sitzplätze oder andere, den Komfort für die Passagiere erhöhende Maßnahmen genutzt werden. Auch können die benötigten Sammelbehälter 5 bzw. Spülwassertanks 11 volumenmäßig verkleinert werden, was ebenfalls zu einer Gewichtsreduzierung führt.

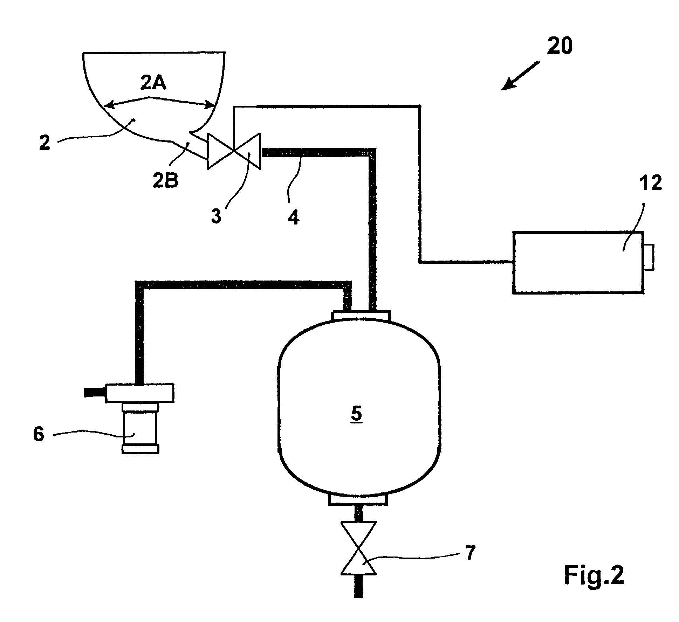

In Fig. 2 ist eine Ausführungsform 20 eines erfindungsgemäßen Toilettensystems ersichtlich. In dieser Ausführungsform sind die Systemkomponenten des Toilettensystems 20 einer nanobeschichteten Toilettenschüssel 2 angepasst, an der keinerlei Verunreinigungen haften bleiben können. So kann völlig auf Spülflüssigkeit zur Reinigung der Oberfläche der Toilettenschüssel 2 verzichtet werden. Die Systemkomponenten Spülring 8, Spülflüssigkeitstank 9 (bzw. Frischwasserzuleitung), Zuführleitung 10 und Spülwasserventil 11 sind im Toilettensystem 20 nicht mehr vorhanden, was erheblich das gesamte Toilettensystem 20 vereinfacht und den Wartungsaufwand verringert. Die Toilettenschüssel 2 ist zumindest im Bereich 2A, in dem verunreinigende Substanzen mit der Oberfläche der Toilettenschüssel in Kontakt kommen mit der Nanoschicht 15 versehen. Durch Wegfall des Spülwasserventils 11 sind die Wartungsmaßnahmen für die Reinigung, Entkalkung und Austausch der Dichtelemente dieses Ventils 11 nicht mehr notwendig und die gesamte Systemzuverlässigkeit erhöht sich, da Undichtigkeiten im Spülwasserkreis entfallen. Darüber hinaus ergeben sich die schon zur ersten Ausführungsform genannten Vorteile.
Die weiteren Systemkomponenten sind identisch mit der Ausführungsform des Toilettensystems gemäß Fig. 1. Durch den Wegfall der Spülwasserzuführung ist eine vereinfachte Steuerung und damit eine Vereinfachung der Steuereinheit 12 erreicht. Für das Abführen der in der Toilettenschüssel 2 angesammelten Abfallprodukte ist nur noch das Öffnen und Schließen des Abwasserventils 3 notwendig und der Transport des Abfallproduktes wird zum größten Teil mittels der Absaugluft des innerhalb des Toilettensystems herrschenden Vakuums erreicht. Darüber hinaus wirkt sich aufgrund der minimalen Haftung von Verunreinigungen an der Oberfläche der Toilettenschüssel 2 die Schwerkraft vorteilhaft aus und nach dem Abtransport des Abfallproduktes ist die Toilettenschüssel 2 auch ohne Spülung sauber.

In den Figuren 3 und 4 ist ersichtlich, inwieweit sich durch eine Nanobeschichtung der Benetzungswinkel an der Oberfläche einer Toilettenschüssel 2 verringert.
In Fig. 3 ist eine herkömmliche Oberfläche 14 ohne Beschichtung oder mit einer bekannten, beispielsweise PTFE-beschichteten Toilettenschüssel gezeigt. Ein Wasser- bzw. Fäkalientropfen 13 befindet sich auf der Oberfläche 14 der Toilettenschüssel 2. Der Benetzungswinkel 13A ist relativ groß und somit ist eine Haftung des Tropfens 13 auf der Oberfläche 14 gegeben. In Fig. 4 ist die Oberfläche 14 mit einer Nanobeschichtung 15 versehen. Die Nanobeschichtung 15 wird mittels Nano-Technologie erzeugt und auf der Oberfläche 14 aufgebracht. Sie wird näher in der nachfolgenden Fig. 5 gezeigt und deren Herstellung beschrieben. Die Nanobeschichtung 15 besitzt eine Schichtdicke im Nanometer-Bereich. Mittels der Nano-Technologie entstehen geordnete Oberflächen, die zur Folge haben, dass bei Benetzung der Oberfläche der Benetzungswinkel 13B gegen 0° geht und somit eine bestmöglich erreichbare Antihaftbeschichtung entsteht. Die Adhäsion der Wasser-bzw. Fäkalienteilchen 13 an der Nanobeschichtung 15 ist gehemmt oder zumindest wesentlich reduziert. Der Wasser- bzw. Fäkalientropfen 13 haftet nicht an einer solchen Oberfläche, wenn die Toilettenschüssel 2 gemäß der Figuren 1 und 2 damit beschichtet ist. Die Fakalienteile bzw. -tropfen 13 fallen durch die Schwerkraft in den vorzugsweise ebenfalls beschichteten Auslauf 2B der Toilettenschüssel 2 und werden dann durch die Einwirkung des Vakuums über die Sammelleitung 4 in den Sammelbehälter 5 abgesaugt.

In Fig. 5 ist als Einzelheit eine erfindungsgemäße Toilettenschüssel 2 gezeigt. In der vergrößerten Darstellung 5A ist die Nanoschicht 15 auf der Oberfläche der Toilettenschüssel 2 in einer Schnittdarstellung ersichtlich. Vorzugsweise ist die Toilettenschüssel aus Edelstahl gefertigt, da zum einen Korrosion verhindert wird und andererseits dieses Material nicht spröde ist. Aber auch Kunststoffmaterialien sind für die Toilettenschüssel und weiteren Komponenten des Toilettensystems anwendbar.
Die Toilettenschüssel 2 ist in der gezeigten Ausführungsform mit einer Grundschicht 16 versehen. Eine solche Schicht 16 kann möglicherweise notwendig sein, wenn ein Aufbringen der Nanoschicht 15 auf das Grundmaterial der Toilettenschüssel Probleme - z.B. keine ausreichende Haftung bzw. zu hohe Rauhigkeit - mit sich bringt und die Nanoschicht 15 auf der Grundschicht 16 besser erzeugt werden kann.
Alternativ dazu oder auch unterhalb der Grundschicht 16 ist in einer bevorzugten Ausführung eine Vorbehandlung der zu beschichtenden Oberfläche im Toilettenbecken vorgesehen. Die Oberfläche muss dafür geschliffen werden, um eine Oberflächenrauhigkeit im Bereich von < 100 nm und eine Mittenrauhigkeit im Bereich von < 10nm zu erreichen. Abschließend wird die Oberfläche mit einem organischen Lösungsmittel und/oder mittels Ultraschalleinwirkung gereinigt.
Im folgenden wird das Aufbringen der Nanoschicht 15 auf eine Toilettenschüssel 2 näher beschrieben.
Als Material zur Herstellung der Nanoschicht 15 eignen sich vorzugsweise Metalle oder Elemente der vierten Hauptgruppe des Periodensystems, insbesondere Cr, Ti, Mn, Ni, Ta, Al, V, W, Co, Be, Zr, Hf, Nb, Mo, C, Si, Ge oder Sn, oder Verbindungen mit den genannten Elementen. Es ist möglich, Verbindungen mit metallischen Bindungscharakter, insbesondere Karbide wie MC sowie Sekundärkarbide M₂C, M₃C, M₆C, M₇C, M₂₃C₆ zu verwenden, wobei hier das M als ein Metall oder für eine intermetallische Metallgruppe steht. Es ist weiterhin möglich, Nitride der Struktur MN oder Boride der Struktur MB zu verwenden, wobei das M wiederum für Metall steht.

Auch ist es möglich, die Nanoschicht 15 aus einer Verbindung mit kovalentem Bindungscharakter, wie z.B. B₄C, SiC, BN, Si₃N₄ oder MoS₂ herzustellen.

Die Schicht 15 kann auch aus einer Verbindung mit ionischem Bindungscharakter wie zum Beispiel Al₂O₃ oder ZrO₂ oder BeO hergestellt werden.
Desweiteren kann die Nanoschicht 15 auch aus einer Sialon-Verbindung oder aus Polymeren ausgebildet sein.

Die Erzeugung von "Dünnen Schichten" bzw. "Ultradünne Schichten", wie eine Nanobeschichtung auch genannt wird, kann neben der klassischen Aufdampfmethode mittels Widerstandsheizung durch vakuumgestützte Verfahren erfolgen. Die Anforderungen an die Herstellung von Schichten mittels der Nanotechnologie sind gekennzeichnet durch atomar scharfe Grenzflächen und die Kontrolle einer atomlagenweisen Deposition. Es handelt sich größtenteils um Vakuumverfahren, die entweder auf Molekularstrahlepitaxie (MBE) oder Abscheiden aus der Gasphase basieren.

Mögliche Herstellungsverfahren sind z.B.:
■ Kathodenzerstäubung
■ Ionenimplantierung
■ Sputtertechnik (Plasmastrahlquelle, Magnetronzerstäubung, RFDiodenzerstäubung)
■ Gasphasenabscheidung (Chemical Vapor Deposition -CVD-, Atomic Layer Epitaxy -ALE-, Chemical Beam Epitaxy - CBE-)
■ PACVD-(Plasma assisted Chemical Vapor Deposition) Verfahren
■ PVD- (Physical Vapor Deposition) Verfahren

Möglich ist es weiterhin, eine Antihaftbeschichtung auf Basis von anorganischorganischen Nanokompositen mit niedriger Oberflächenenergie zu erzeugen. Eine solche Beschichtung kann durch bekannte Beschichtungstechnologien, wie Tauchen, Sprühen oder Schleudern, mit anschließender Härtung durch UV-Stahlung und/oder thermischen Einfluss erzielt werden, wobei Nanopartikel die gewünschten Antihafteigenschaften erzielen.

Bei den möglichen Verfahren zur Herstellung der Nanoschicht 15 ist es wesentlich, dass die Nanoschicht 15 eher weich und nicht-spröde ausgebildet wird. Damit wird verhindert, dass von der Toilettenschüssel 2 Teile der Nanoschicht 15 abblättern können.
Als bevorzugtes Herstellungsverfahren ist die Magnetron-Sputter-Technik vorgesehen. Diese, dem Fachmann bekannte Technik gehört zur Verfahrensgruppe der Kathodenzerstäubung, bei der im Vakuum die Beschichtung aufgebracht und ein fester Untergrund mit metallischen bzw. nichtmetallischen Schichten versehen wird. Das Beschichtungsmaterial auf den Kathoden wird durch Beschuß mit Gasionen in einer Gasatmosphäre zerstäubt und schlägt sich auf der Toilettenschüssel-Oberfläche als Schicht nieder. Die lonen sorgen dafür, dass die oberen Atomschichten aus dem Beschichtungsmaterial durch Impulsaustausch in den gasförmigen Zustand überführt werden. Das nun im gasförmigen Zustand vorliegende Beschichtungsmaterial scheidet sich dann auf der zu beschichtenden Fläche ab.

Mit dieser Magnetron-Sputter-Technik ist die thermische Belastung der zu beschichtenden Toilettenschüssel relativ gering. Mit dem Einsatz einer Doppelring-Magnetronquelle sind derzeit Beschichtungsdurchmesser bis zu 150 mm möglich mit einer Beschichtungsrate von 0,1 bis 1mm/min.

In der bisher gezeigten Ausführungsform ist die Nanobeschichtung der Toilettenschüssel 2 näher beschrieben worden. Es ist möglich, daß mit geeigneten Aufbringungsmethoden auch andere Systemkomponenten, die mit Fäkalien bzw. Verunreinigungen in Kontakt kommen, mit einer Nano-Schicht versehen werden. So ist beispielsweise eine Beschichtung der Sammelleitung 4 bzw. zumindest von Teilen der Sammelleitung 4, wie Abzweigungen, denkbar, um den Reinigungsaufwand des Toilettensystems so gering wie möglich zu halten.

## Patentansprüche

1. Toilettensystem (20), insbesondere für Verkehrsmittel, wobei mindestens ein Toilettenbecken (2) vorgesehen ist, welches über ein Absaugventil (3) mit einem Sammelbehälter (5) verbunden ist, **dadurch gekennzeichnet, dass** das Toilettensystem (20) unter Ausschluss von Mitteln zur Spülwasserzuführung aufgebaut ist und zumindest teilweise die mit den abzuführenden Verunreinigungen in Kontakt kommenden Systemkomponenten mit einer Nanoschicht (15) versehen sind.

2. Toilettensystem nach Anspruch 1,
**dadurch gekennzeichnet, dass**
die Oberfläche des Toilettenbeckens (2) zumindest in Bereichen (2A, 2B), die mit verunreinigenden Substanzen in Berührung kommen, mit der Nanoschicht (15) versehen ist.

3. Toilettensystem nach einem der Ansprüche 1 bis 2,
**dadurch gekennzeichnet, dass**
zumindest teilweise Absaugluft, die nach dem Öffnen des Absaugventils (3) in das Toilettenbecken (2) gelangt, zum Reinigen des Toilettenbeckens vorgesehen ist.

4. Toilettensystem nach einem der Ansprüche 1 bis 4,
**dadurch gekennzeichnet, dass**
die Nanoschicht (15) aus einem Metall oder einem Element der vierten Hauptgruppe des Periodensystems oder einer Verbindung mit kovalentem Bindungscharakter oder aus einer Verbindung mit ionischem Bindungscharakter oder aus einer Sialon-Verbindung oder aus einem Polymer besteht.

5. Verfahren zur Herstellung eines Toilettensystems nach einem der vorangegangenen Ansprüche,
**dadurch gekennzeichnet, dass**
eine Beschichtung zumindest teilweise auf die mit den abzuführenden Verunreinigungen in Kontakt kommenden Bereiche (2A, 2B) der Systemkomponenten aufgebracht wird, wobei die Schicht ( 15) als "Dünne Schicht" mittels Nanotechnologie erzeugt wird.

6. Verfahren nach Anspruch 5,
**dadurch gekennzeichnet, dass**
die Oberfläche der mit der Nanoschicht (15) vorgesehenen Bereiche (2A, 2B) der Systemkomponenten, beispielsweise des Toilettenbeckens (2), mit einer Grundschicht (16) versehen wird, auf die die Nanoschicht (15) aufgebracht wird.

7. Verfahren nach einem der Ansprüche 5 oder 6,
**dadurch gekennzeichnet, dass**
die Oberfläche der Bereiche (2A, 2B) mittels Schleifen und Reinigen vorbehandelt wird.

8. Verfahren nach einem der Ansprüche 5 bis 7,
**dadurch gekennzeichnet, dass**
die Nanoschicht (15) mittels Kathodenzerstäubung aufgebracht wird.

9. Verfahren nach einem der Ansprüche 5 bis 7,
**dadurch gekennzeichnet, dass**
zum Aufbringen der Nanoschicht (15) ein Magnetron-Sputter-Verfahren eingesetzt wird.

10. Verfahren nach einem der Ansprüche 5 bis 7,
**dadurch gekennzeichnet, dass**
die Nanoschicht (15) durch lonenimplantieren oder Sputtertechnik oder Gasphasen-abscheidung (CVD-Prozeß, PACVD-Prozeß) oder Physical Vapor Deposition-Verfahren (PVD-Prozeß) auf die Oberfläche aufgebracht wird.

11. Verfahren nach einem der Ansprüche 5 bis 7,
**dadurch gekennzeichnet, dass**
zum Aufbringen der Nanoschicht (15) übliche Beschichtungsverfahren, wie Tauchen, Sprühen oder Schleudern, mit Einbringen von Nanopartikeln eingesetzt werden.

12. Verfahren nach Anspruch 11,
**dadurch gekennzeichnet, dass**
nach dem Beschichtungsprozess eine Härtung durch UV-Strahlung und/oder durch thermischen Einfluss durchgeführt wird.

## Claims

1. A toilet system (20), in particular for means of transport, at least one toilet bowl (2) being provided, which is connected to a collecting tank (5) via a suction valve (3), **characterised in that** the toilet system (20) is constructed to exclude flushing water supply means and the system components coming into contact with the soil to be removed are provided at least in part with a nanolayer (15).

2. A toilet system according to claim 1,
**characterised in that**
the surface of the toilet bowl (2) is provided with the nanolayer (15) at least in areas (2A, 2B) which come into contact with soiling substances.

3. A toilet system according to one of claims 1 to 2,
**characterised in that**
at least in part suction air, which enters the toilet bowl (2) after opening of the suction valve (3), is provided for cleaning the toilet bowl.

4. A toilet system according to one of claims 1 to 4,
**characterised in that**
the nanolayer (15) consists of a metal or an element of main group IV of the Periodic Table or a compound of covalent bond character or of a compound of ionic bond character or of a sialon compound or of a polymer.

5. A method of producing a toilet system according to one of the preceding claims,
**characterised in that**
a coating is applied at least in part to the areas (2A, 2B) of the system components coming into contact with the soil to be removed, wherein the layer (15) is produced as a "thin film" by nanotechnology.

6. A method according to claim 5,
**characterised in that**
the surface of the areas (2A, 2B) of the system components, for example of the toilet bowl (2), provided with the nanolayer (15) is provided with a base layer (16), onto which the nanolayer (15) is applied.

7. A method according to one of claims 5 or 6,
**characterised in that**
the surface of the areas (2A, 2B) is pretreated by grinding and cleaning.

8. A method according to one of claims 5 to 7,
**characterised in that**
the nanolayer (15) is applied by cathodic atomisation.

9. A method according to one of claims 5 to 7,
**characterised in that**
a magnetron sputtering method is used to apply the nanolayer (15).

10. A method according to one of claims 5 to 7,
**characterised in that**
the nanolayer (15) is applied to the surface by ion implantation or sputtering technology or gas-phase deposition (CVD process, PACVD process) or physical vapour deposition (PVD process).

11. A method according to one of claims 5 to 7,
**characterised in that**
conventional coating methods, such as dip-coating, spraying or centrifuging, with the introduction of nanoparticles, are used to apply the nanolayer (15).

12. A method according to claim 11,
**characterised in that**
hardening by UV radiation and/or thermal input is performed after the coating process.

## Revendications

1. système de toilettes (20), en particulier pour des véhicules, dans lequel au moins une cuvette de toilette (2) a été prévue, cette cuvette étant raccordée à un récipient collecteur (5) par l'intermédiaire d'une soupape d'aspiration (3), et **caractérisé en ce que** le système de toilettes (20) a été conçu sans moyens d'alimentation en eau de rinçage et **caractérisé en ce que** les composantes du système entrant en contact avec les impuretés à évacuer ont été dotées, au moins partiellement, d'une nanocouche (15).

2. Système de toilettes selon la revendication 1, **caractérisé en ce que** la surface de la cuvette de toilette (2) a été dotée, au moins dans les segments (2A, 2B) entrant en contact avec les substances polluantes, d'une nanocouche (15).

3. Système de toilettes selon une des revendications 1 à 2, **caractérisé en ce que** de l'air d'aspiration parvenant dans la cuvette de toilette (2), après ouverture de la soupape d'aspiration (3), a été prévu au moins partiellement pour nettoyer la cuvette de toilette.

4. Système de toilettes selon une des revendications 1 à 4, **caractérisé en ce que** la nanocouche (15) est constituée d'un métal ou d'un élément du quatrième groupe principal du tableau périodique, d'une liaison à caractère de liaison covalente, d'une liaison à caractère de liaison ionique, d'une liaison Sialon ou encore d'une polymère.

5. Procédé pour l'installation d'un système de toilettes selon une des revendications précédentes, **caractérisé en ce que** une couche est appliquée au moins en partie sur les segments (2A, 2B) des composantes du système entrant en contact avec les impuretés à évacuer, la couche (15) étant produite comme « couche fine » à l'aide de la nanotechnologie.

6. Procédé selon la revendication 5, **caractérisé en ce que** la surface des segments (2A, 2B) des composantes du système équipés de la nanocouche (15), comme les segments de la cuvette de toilette (2), par exemple, ont été pourvus d'une couche de base (16) sur laquelle la nanocouche (15) a été appliquée.

7. Procédé selon une des revendications 5 ou 6, **caractérisé en ce que** la surface des segments (2A, 2B) est pré-traitée par rectification et nettoyage.

8. Procédé selon une des revendications 5 à 7, **caractérisé en ce que** la nanocouche (15) est appliquée par pulvérisation cathodique.

9. Procédé selon une des revendications 5 à 7, **caractérisé en ce que** un procédé de pulvérisation par magnétron est utilisé pour appliquer la nanocouche (15).

10. Procédé selon une des revendications 5 à 7, **caractérisé en ce que** la nanocouche (15) est appliquée sur la surface par implantation ionique, technique de pulvérisation, séparation de phases vapeurs (processus CVD, PACVD) ou procédé Physical Vapor Deposition (PVD).

11. Procédé selon une des revendications 5 à 7, **caractérisé en ce que** des procédés d'enduction traditionnels comme l'immersion, la pulvérisation ou la centrifugation, avec insertion de nanoparticules, sont utilisés pour appliquer la nanocouche.

12. Procédé selon la revendication 11, **caractérisé par** un durcissement aux rayons UV et/ou par influence thermique, après le processus d'enduction.
